# EUROPEAN PATENT APPLICATION

(11) **EP 2 806 383 A1**
(43) Date of publication of application: **26.11.2014**
(21) Application number: 14169647.6
(22) Date of filing: 23.05.2014
(51) Int. Cl.: G06Q 10/06

(54) **Device and method for collecting and managing information of equipment**

(30) Priority: 24.05.2013 JP 2013109761
(71) Applicant: Hitachi Ltd., Tokyo 100-8280 (JP)
(72) Inventor: Kawada, Yohei, Tokyo, 100-8280 (JP); Ota, Nobuyuki, Tokyo, 100-8280 (JP); Ando, Ryosuke, Tokyo, 100-8280 (JP)
(74) Representative: MERH-IP Matias Erny Reichl Hoffmann

(57) **Abstract**

An information management device collects from a plurality of equipment (20) and retains operation information being information that indicates operation statuses of the plurality of equipment (20), and refers with an information utilizing device that provides a service that utilizes the operation information, including retaining information relating to a contract that has defined a service level provided in relation to the equipment (20), acquiring the contract information of the equipment (20), and creating based on the contract information management policy information being information that defines a management scheme of the operation information retained for each of the equipment (20), to include storage location information being information of a storage location of at least each of the storage information.

## Description

### CROSS-REFERENCE TO RELATED APPLICATION

The present application claims the benefit of priority pursuant to 35 U.S.C. §119(a) to Japanese Patent Application No. 2013-109761, filed on May 24, 2013, the entire disclosure of which is hereby incorporated herein by reference.

### BACKGROUND

### Technical Field

Embodiments of this disclosure generally relate to an information management device and an information management method.

### Related Art

As maintenance services provided for construction equipment and the like, there have been made proposals to detect an abnormality or an indication of an abnormality using numerous sensors attached to the equipment and monitoring at real time the operation information on the equipment provided through the measurements taken by the sensors and conduct prompt measures thereto such as replacing components. Further, proposals have been made to utilize the operation information collected from the equipment and amassed for investigating the tendency of the equipment causing the abnormality and the cause thereof when an abnormality has been encountered, or suspecting an abnormality after a case where although there is no abnormality, a value deviating from a steady state is measured. However, the amount of operation information amassed will be voluminous when there is a large number of equipment as the targets of maintenance and the management costs for them will also grow.

There has been a proposal for solving the above problem, to apply an information life-cycle management called ILM (Information Lifecycle Management) that focuses on changes in the business values of the information along with time. ILM allows reduction in the management cost of information by applying an information management method corresponding to the business values of the time according to a policy specified in advance. For example, a technology proposes a configuration for assisting the application of an appropriate information method based on the requirements of both the statutory requirement (prosecution time limit, storage term etc.) and the information life-cycle management requirement (significance of data, access frequency etc.) in order to control the operation cost for storing and preserving statutory documents (JP-2007-193408-A).

The above maintenance service provided for construction equipment and the like, needs to provide services that satisfy the service level defined in the contract concluded between the service provider (maintenance service provider) and those offered the service (equipment user). The life-cycle management scheme of the information required for providing the service also needs to select an appropriate scheme according to each service level since the service level differs between each contract. Additionally, having a possibility that the service level will be changed at the time of renewal of the contract there may be a need to adapt the information life-cycle management scheme to such changes. However, the technology disclosed in JP-2007-193408-A assuming a statutory requirement does not take into consideration the need to apply different policies according to the differences in the contract details even if the information may be of the same type as in the above maintenance service. Further, when the technology disclosed in JP-2007-193408-A is applied to the definition of the policy based on the contract concluded between the service provider and the user, the operator needs to set a policy for each contract. And also the operator needs to search and revise the relevant policy in accordance with the changed contents when the contract details are changed.

It is therefore an objective of the present invention to provide an information management device and an information management method that can automatically create, based on the contract details relating to an information service, policies relating to data management that meets the details defined in the contract.

Meanwhile, the technology disclosed in JP-2007-193408-A handles only the operation information of sensor values corresponding to abnormalities and indications in the highspeed and high-reliability management scheme when the operation information of abnormalities of equipment or indications thereof are defined as data of high importance. However, there is a possibility that operation information is assumed to be that of a cause of or an indication of an abnormality, although being just a steady-state operation information, or the operation information from other sensors provided during the time of the abnormality or the indication may be handled by a low-speed and a low-reliability management scheme as data of low importance. In this case, the maintenance service provider would require time to search for the operation information when investigating the cause of the abnormality preventing a prompt countermeasure to be taken against the abnormality leading to a possibility that the service level assured in the contract may not be satisfied.

Therefore another objective of the present invention is to provide an information management device and an information management method that widely collects and allows the use of information used to carry out businesses of the information service users. Other objectives of the present invention will become apparent from the following description of the embodiments.

### SUMMARY

Disclosed embodiments describe an information management device collects from a plurality of equipment and retains operation information being information that indicates operation statuses of the plurality of equipment, and refers with an information utilizing device that provides a service that utilizes the operation information, the device including a contract information retaining unit that retains contract information being information relating to a contract that has defined a service level in relation to the equipment provided by the information utilizing device, and a management policy creation unit that acquires from the contract information retaining unit the retained contract information of each of the equipment, and creates based on the contract information management policy information being information that defines a management scheme of the operation information retained for each of the equipment, to include storage location information being information of a storage location of at least each of the storage information..

Other problems disclosed in the present application and the means for solving such problems will become clear from the description in the detailed description of the invention and the drawings attached.

According to the present invention, operation information of a plurality of equipment can be effectively managed according to the management details defined for each equipment.

### BRIEF DESCRIPTION OF THE DRAWINGS

For a more complete understanding of the present invention and the advantages thereof, reference is now made to the following description taken in conjunction with the accompanying drawings wherein:
Fig. 1 is a schematic diagram of an information management system 1 of one embodiment of the present invention;
Fig. 2 is a block diagram illustrating an overall configuration of a server 10 that is an information management device;
Fig. 3 is a diagram illustrating an example of a history table 141a that is retained by the history database (hereinafter "DB") 141;
Fig. 4 is a diagram illustrating an example of an attribute table 18a retained by the equipment configuration master 18;
Fig. 5 is a diagram illustrating an example of a configuration relation table 18b retained by the equipment configuration master 18;
Fig. 6 is a diagram illustrating an example of a contract table 19a retained by the contract DB 19;
Fig. 7 is an example of a flowchart illustrating a policy creation process;
Fig. 8 is a diagram illustrating an example of a contract classification master 19b retained by the contract DB 19;
Fig. 9 is a diagram illustrating an example of a contract policy table 17a retained by the policy DB 17;
Fig. 10 is a diagram illustrating an example of an abnormal value policy table 17b retained by the policy DB 17;
Fig. 11 is an example of a flowchart illustrating a data migration process;
Fig. 12 is a diagram illustrating an example of a history corresponding to the abnormal value policy retained by the history table 141a;
Fig. 13 is a diagram illustrating an example of a related degree table 16a retained by the related degree DB 16;
Fig. 14 is a schematic diagram relating to a period setting example;
Fig. 15 is an example of a flowchart illustrating a history management process;
Fig. 16 is a diagram illustrating an example of a reference frequency table 15a retained by the reference history DB 15;
Fig. 17 is an example of a flowchart illustrating a related degree management process;
Fig. 18 is a diagram illustrating an example of a related degree update master 16b retained by the related degree DB 16;
Fig. 19 is a flowchart illustrating a process of an equipment configuration management program;
Fig. 20 is a diagram illustrating an example of a related degree definition master 16c retained by the related degree DB 16; and
Fig. 21 is a schematic diagram of an equipment configuration example to which the information management system 1 is applied.

### DETAILED DESCRIPTION

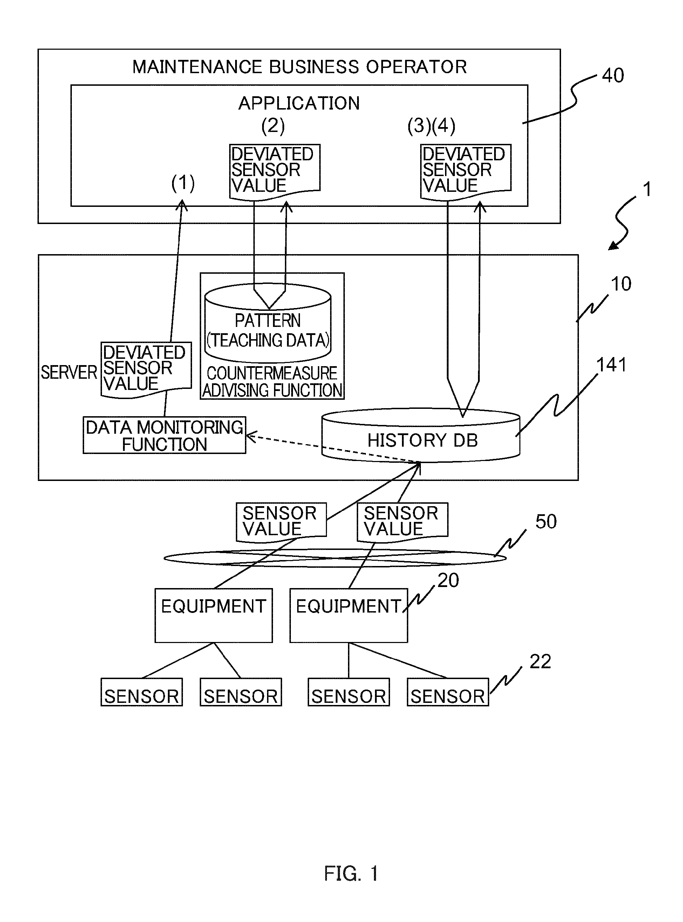

One embodiment of the present invention of the information management system is described in detail below with reference to the drawings. The information management system 1 of one embodiment schematically illustrated in Fig. 1 is applied to managing information of construction equipment and mining equipment (hereinafter referred to as "equipment") used at mines and the like. Equipment maintenance work assumed in the present embodiment will be described in the following with reference to the drawing.

A maintenance business operator that has concluded a maintenance service contract with a user on equipment, manages information from multiple equipment 20 with the server 10. The server 10 retains information required for managing and maintaining the equipment 20, and provides information to the business operator that actually maintains the equipment 20 and their application 40. During operation of the equipment 20, sensor values periodically collected from one or more sensors 22 attached to the components configuring the equipment 20 are further collected by the server 10 through, for example, M2M (Machine to Machine) and the like communication network 50 such as public lines. The collected sensor values are stored in the history DB 141 of the server 10. Here, the data monitoring function on the server 10 side is to check the values of the collected sensor values, and detect and notify the equipment maintenance business operator of the sensor values that are deviated from the threshold values (hereinafter, deviated sensor values) or the ranges of the sensor values defined in advance for each sensor 22. An example of such is a sensor value indicating that the engine output of equipment 20 has fallen below the range of the steady state ((1) in Fig. 1).

The equipment business operator receives a notification from the data monitoring function of (1) and inputs the notified deviated sensor value to the countermeasure advising function of the server 10. The countermeasure advising function retains the past deviated sensor values and combination patterns (teaching data) of the countermeasures taken for solving the problems. When there is a "pattern" similar to the input retained, the countermeasure advising function provides one or more of the patterns to the equipment business operator that has performed the input. When one pattern is indicated, the equipment business operator executes the countermeasure described in the pattern or gives an instruction to the worker at the site. For example, changing the engine oil is indicated as the countermeasure for the pattern similar to the sensor value of the engine output of (1) ((2) in Fig. 1).

When determining that a pattern corresponding to (2) does not exist, the equipment business operator searches the history DB 141 in the server 10 whether a sensor value similar to the deviated sensor value of (1) existed in the past. When such sensor value is found, the equipment business operator compares the sensor values of other sensors 22 of the period same as the sensor value deviated period of (1) or the sensor values during the periods before and after the sensor value deviated period, to the relevant other sensors 22 in the past or the sensor values during the periods before and after to investigate the cause of the deviated sensor value of (1) or to assume the abnormality due to the cause of the deviated sensor value of (1), and carries out studies for the countermeasures required in association therewith. This also serves to create a new pattern to be added to the countermeasure advising function ((3) in Fig. 1).

When the countermeasure advising function of the server 10 indicates a plurality of patterns in (2), the equipment business operator examines which countermeasure pattern among those indicated is the best. To this end, similar to the case of (3), the equipment business operator searches the past sensor values in the history DB 141 and compares the sensor values of other sensors 22 of the period same as the sensor value deviated period of (1) or the sensor values during the periods before and after the sensor value deviated period, to the relevant other sensors 22 in the past or the sensor values during the periods before and after to select the pattern with the most similar status to execute the countermeasure ((4) in Fig. 1).

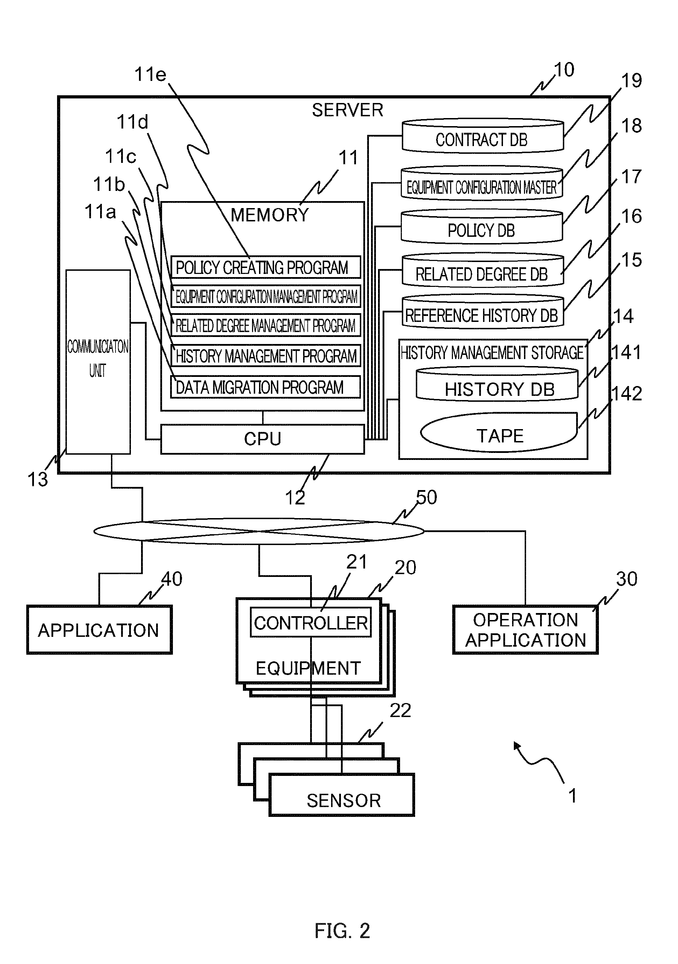

A case where the history DB 141 provided by the information management system 1 of the present embodiment is applied to the data life-cycle management in the equipment maintenance work exemplified in above (1) to (4) and is shown in the block diagram illustrated in Fig. 2. Only the configuration of the data life-cycle management of the information management system 1 is described in Fig. 2 to facilitate the understanding.

The server 10 (information management device) in Fig. 2 is a computer that retains therein information required for the management and maintenance of the equipment 20, and provides the information to the maintenance application 40, as described above. The server 10 collects sensor values from the sensors 22 attached to the equipment 20 being the management target. The server 10 receives and retains the sensor values periodically sent from one or more equipment 20 in its own database (DB). Additionally, the server 10 provides sensor values retained in the DB to the application 40.

The application 40 and the server 10 are coupled via the communication network 50, and the application 40 sends a sensor value history acquisition request including search conditions to the server 10 periodically or at an appropriate timing. The server 10 returns to the application 40 the history of the applicable sensor value as a response. The application 40 is, for example, implemented in a computer set to the offices and the like of the maintenance business operator that uses the functions of the server 10.

The server 10 is also coupled to the operation application 30. The operation application 30 is an application for providing services such as migration of the DB retained in the server 10 by the operator of the server 10. The operator gives a command to migrate data through the interface provided by the operation application 30 and the operation application 30 provides services by notifying the details to the server 10. The operation application 30 is, for example, implemented in the computer (information utilizing device) set in offices and the like of the operation manager of the server 10.

Note that, the server 10 is configured as a computer including at least a memory 11 as the storage means used when performing arithmetic processing and a processing unit that performs the arithmetic processing, as to be described later. The memory 11 is configured with a RAM (Random Access Memory) and the like. And the arithmetic processing is implemented by executing a program in the memory 11 by the arithmetic processing device configured with a CPU (Central Processing Unit) 12. Additionally, the computer configuring the server 10 includes a communication unit 13 that is a network interface used for communication. Data communication performed over the network 50 can be implemented using an appropriate communication protocol.

The equipment 20 as the target of data collection has a CPU, a memory, and a network interface embedded as a controller 21. The controller 21 periodically collects sensor values from the sensors 22 attached to the components of the equipment 20 and periodically sends the collected information to the server 10. Although depending on the usable band of the communication network 50, the information transmission interval is assumed to be set to at least once every few minutes or once every several tens of seconds if there is an allowance in the band so that the abnormalities of the equipment 20 and the indications thereof can be promptly sent to the maintenance business operator.

The following describes a specific configuration example of the server 10 with reference to Fig. 1. The communication unit 13 of the server 10 receives sensor values sent to the server 10 by the equipment 20. Also the communication unit 13 receives from the application 40 a sensor value history reference request and returns the corresponding sensor values. The information sent by the communication unit 13 is passed from the CPU 12 and the information received by the communication unit 13 is sent to the CPU 12.

The CPU 12 decompresses in the memory 11 the information received from the communication unit 13 and executes the various programs in the memory 11 to manipulate the information or register and/or update the information in a cache, a DB or a file in the memory 11. Additionally, the CPU similarly executes the various programs in the memory 11 to search for and acquire information from the cache, the DB or the file in the memory 11, decompresses the information in the memory 11 for manipulation according to need, and for example, sends the information to the communication unit 13. For example, an equipment configuration management program 11d, a history management program 11b, a related degree management program 11c, a data migration program 11a, and a policy creation program 11e (management policy creation unit) are included as programs executed by the CPU 12. Here, the equipment configuration management program 11d is for registering, updating, deleting and searching for the equipment 20 and the components configuring the equipment 20, the sensors 22 attached to the equipment 20, and the user and place of use of the equipment 20. The history management program 11b is for registering and searching for the history of the sensor values collected from the equipment 20. The related degree management program 11c includes a related degree information update unit and manages the later described related degree. The data migration program 11a migrates data of the history of the sensor values as the operation information management unit. And the policy creation program 11e creates a policy for information management by the present system 1. These programs are stored in the storage of such as a hard disk, not shown, as a normal file, and are decompressed in the memory 11 according to need. Details of the operations by the programs are to be given later.

Description of the information retained by the server 10 will follow. The information retained by the server 10 includes, for example, those given below.

The history management storage 14 retains history of the sensor values (operation information) collected from the sensors 22 of the equipment 20. The history management storage 14 includes a history DB 141 that is the operation information history retaining unit and a tape 142. The history DB 141 retains a history table 141a. The sensor values sent from the equipment 20 are firstly registered in the history DB 141. Thereafter, periodically or at a timing when a command to migrate data is executed with the operation application 30, although the history of some of the sensor values in the history DB 141 remain in the history DB 141, the history of the other sensor values or the entire history is migrated to the tape 142 or deleted. Data of the history is compressed according to need when migrating to the tape 142. When referring to the information, there is a need to read, unzip, and load on the memory 11 since the history of the sensor values retained by the tape 142 cannot be randomly accessed. Additionally, the loading of the entire history on the memory 11 is difficult since there is a huge amount of history retained by the tape 142. For the forgoing reasons, data not requiring instantaneous responses are stored in the tape 142 since responding to the reference request made with the application 40 requires time.

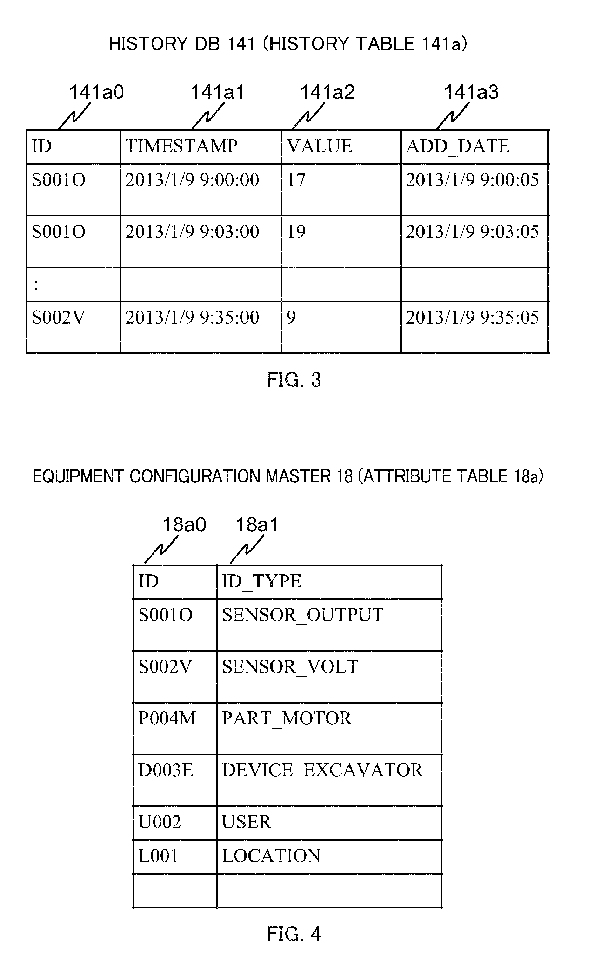

An example of the history table 141a is illustrated in Fig. 3. In the history table 141a, a single record describes a single sensor value, and there are retained therein data such as the ID 141a0 that uniquely specifies a sensor 22, the TIMESTAMP 141a1 that indicates the sensing date and time, the VALUE 141a2 that indicates the sensed value, and the ADD_DATE 141a3 that indicates the registration date and time of the sensor value in the history table 141a. An ID is assigned to each value type when a plurality of types of values can be sensed by a single sensor 22.

The equipment configuration master 18 (equipment configuration information retaining unit) is a DB that retains information of the equipment 20 managed by the server 10, information related to the relation between the equipment 20, information related to the relation between the equipment 20 and the sensor 22, and the information relating to the user and the place of use (e.g. mines) of the equipment 20. The equipment configuration master 18 retains therein an attribute table 18a and a configuration relation table 18b. The attribute table 18a is a table that retains therein attribute information relating to the equipment 20 or sensors 22, the components configuring the equipment 20, the user and the location, respectively. The configuration relation table 18b is a table that retains therein information relating to the relations among the equipment 20 and the sensors 22, components configuring the equipment 20, the user and the location.

An example of the attribute table 18a is illustrated in Fig. 4. In the attribute table 18a, a single record describes single equipment 20, a component, a sensor 22, a user and a location and there are retained therein such as the ID 18a0 that uniquely specifies the above, and ID_TYPEs 18a1 that indicates the types thereof. For example, the sensor 22 having "S001O" allocated as the ID 18a0 is a sensor that senses the motor output. Similarly, the equipment with an ID 18a0 of "P004M" indicates a motor, "D003E" indicates an excavator, "U002" indicates the user of the equipment 20 and the "L001" indicates the place where the equipment 20 is used.

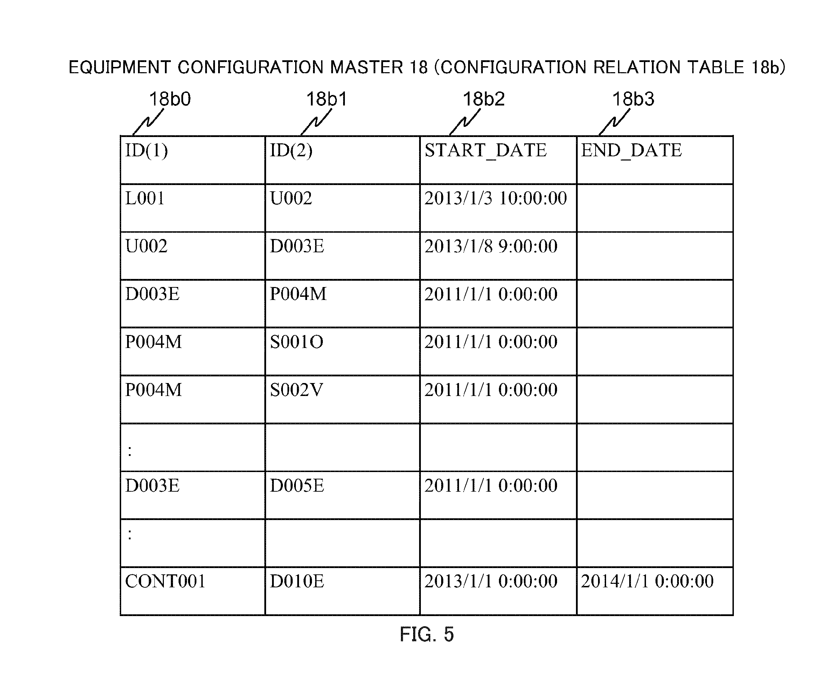

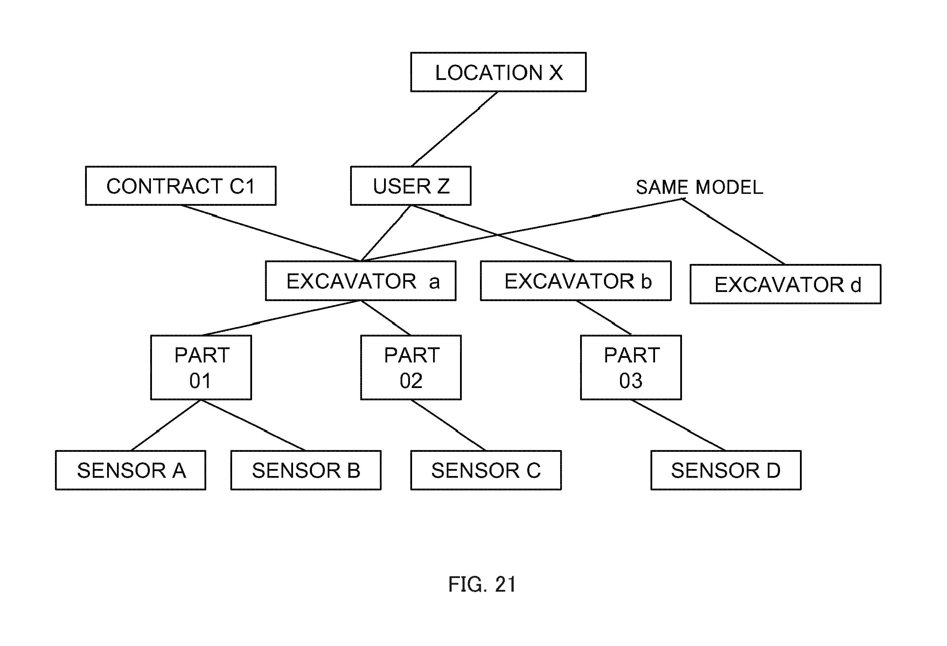

An example of the configuration relation table 18b is illustrated in Fig. 5. One record in the configuration relation table 18b shows a one-to-one relation among equipment 20, a component, a sensor 22, a user, and a location, and the configuration relation table 18b retains therein such as ID(1) 18b0 indicating the first ID describing the relation, ID(2) 18b1 indicating the second ID, START_DATE 18b2 indicating the date and time when the relation had started, and END_DATE 18b3 indicating the date and time the relation has ended. Records that do not have values in the END_DATE 18b3 indicates that the relation is still continuing. For example, the first record in Fig. 5 indicates that the user U002 is working at the location L001. The second record indicates that the user U002 is using the excavator D003E. The third record means that there is a motor P004M as a component configuring the excavator D003E. And the fourth record means that there is a sensor S0010 that measures the output of the motor as the sensor 22 attached to the motor P004M. Additionally, not only the configuration of the relation between the equipment 20, but for example, when the components are the same or when the excavators are of the same model, their relations between them are retained in this configuration relation table 18b. For example, when the excavators D003E and D005E are of the same model, such information is registered as the configuration relation. A schematic diagram of the configuration relation retained in the configuration relation table 18b is shown in Fig. 21. As shown in Fig. 21, there are relations of including or being included among the relations of the place where the equipment 20 is used (LOCATION X), the user of or the individual using the equipment 20 (USER Z), the equipment 20 (EXCAVATOR a), the component (PART 01), and the sensor 22 (SENSOR A), and relations of the contract number based on the maintenance contract concluded between the maintenance business operator and the user (CONTRACT C1) and the equipment 20 as the target of contract (EXCAVATOR a). Since these relations are hierarchical relations, information of those including are retained in ID(1) 18b0 and those included are retained in ID(2) 18b1. The location is retained in ID(1) 18b0 and the user in ID(2) 18b1 in the case of the relation between the location and user. When there is no hierarchical relationship such as in a case showing the same equipment model, either can be retained in the ID(1) 18b0 and ID(2) 18b1. These information have information of the equipment 20, the components, and the sensors 22 registered via the application 40 based on the information of, for example, BOM (Bill of Material) when the maintenance business operator makes the equipment 20. And similarly, the above information has registered information of the place where the equipment 20 is to be used and the user using the equipment 20 when a maintenance contract between the user of the equipment and the maintenance business operator is concluded or when the maintenance business operator sells, or rents or leases the equipment 20.

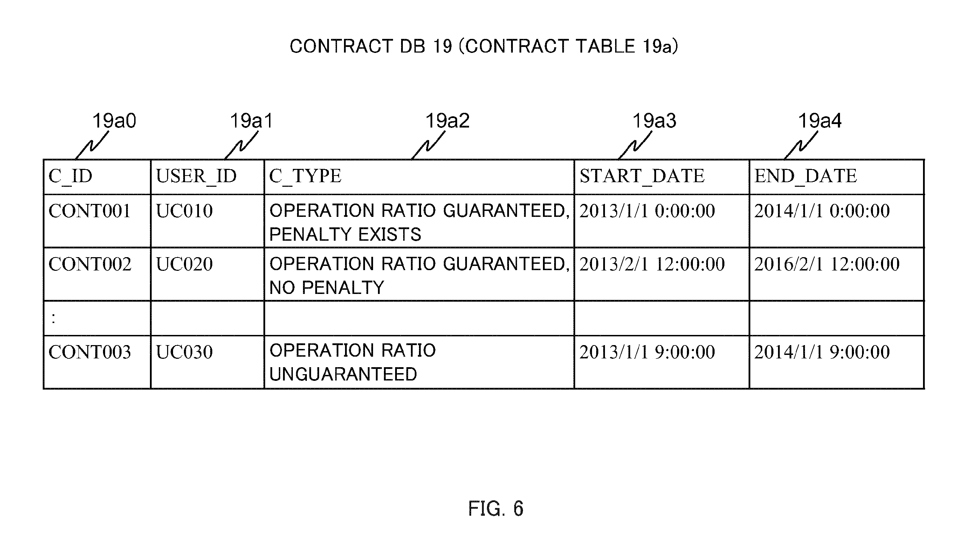

The contract DB 19 (contract information retaining unit) is a DB that retains therein the details of the maintenance contract concluded between the maintenance business operator and the equipment user and includes a contract table 19a. Fig. 6 illustrates an example of the contract table 19a. In the contract table 19a, a single record describes a single contract, and there are retained therein data such as the C_ID 19a0 that indicates the contract number identifying the contract, the USER_ID 19a1 that identifies the equipment user that has concluded the contract, C_TYPE 19a2 that indicates the contract classification, the START_DATE 19a3 that indicates the contract start date and time, and the END_DATE 19a4 that indicates the contract end date and time. Contract classification indicates the type of contract. The present embodiment assumes three classifications being, whether or not the maintenance business operator guarantees the operation of the equipment, and in the case of guarantees, whether or not a penalty of such as paying a penal charge to the equipment user exists in the contract when a down time occurs to the equipment preventing continuous operation. When the contract is extended, the END_DATE 19a4 is not updated, but a new record is added. Explanation of the related degree DB 16, the reference history DB 15, the policy DB 17 and the other tables will be given in the later described descriptions of operations of the programs of the server 10.

### <First Embodiment>

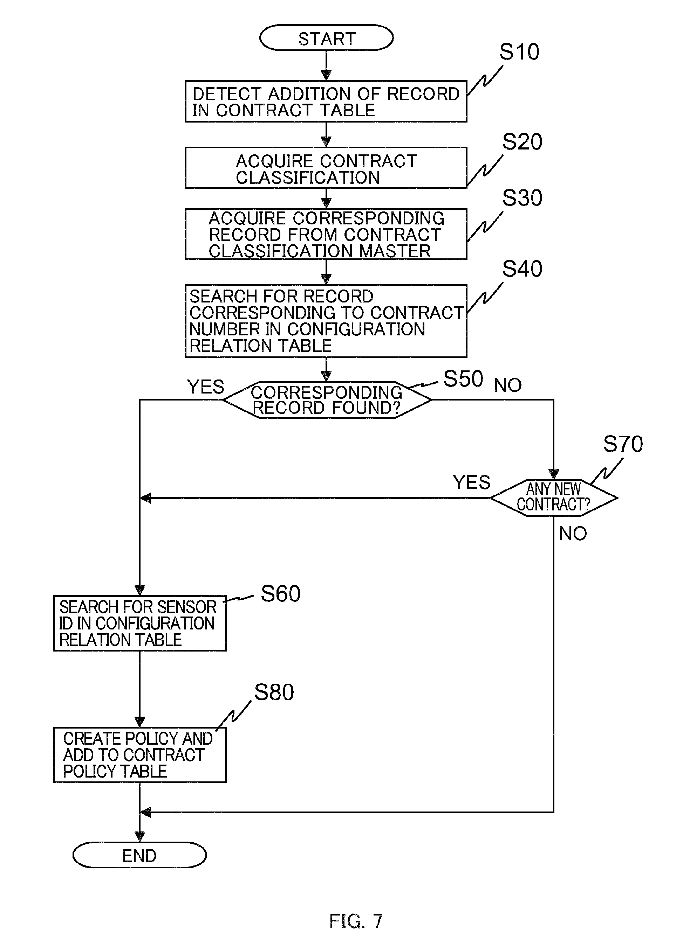

The following gives a description of the operations of the programs of the server 1. Firstly, the operation of the policy creation program 11e will be explained. This program is executed when a record is added to the contract table 19a by the operator of the server 10 using the operation application 30 or the maintenance business operator using the application 40, or when a record specified as the contract number is added to ID(1) 18b0 of the configuration relation table 18b, thereby adding to the policy DB 17 the "policy" relating to data migration in accordance with the contents. Fig. 7 illustrates a flowchart example of the processes performed by the policy creation program 11e. Description with reference to the drawing is given in the following. The description is given with the program as the subject for the sake of convenience of explanation but this operation is actually executed by the CPU 12 reading the program.

Firstly, the process that is performed when a new record is added to the contract table 19a is described. The policy creation program 11e detects an addition of a new record to the contract table 149a by, for example, periodically monitoring the contract table 19a, and acquires the contents (S10).

The policy creation program 11e extracts a value of the contract classification C_TYPE 19a2 from the record acquired at S10 (S20).

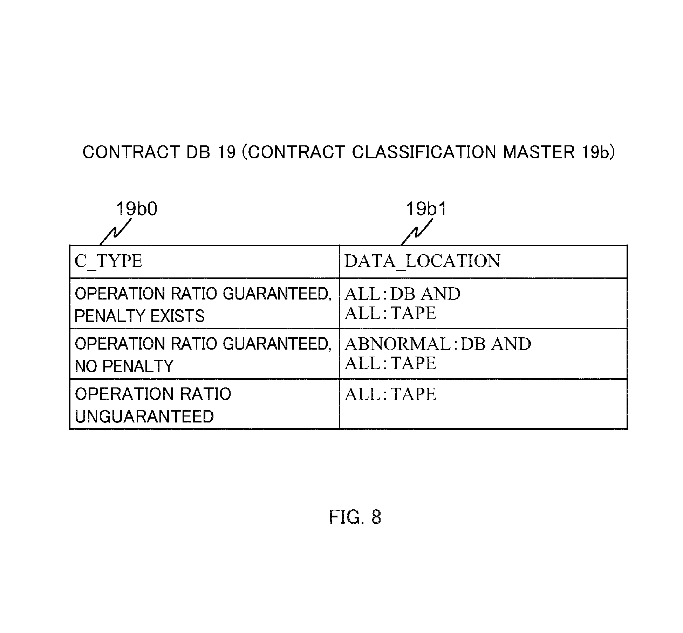

The policy creation program 11e refers to the contract classification master 19b of the contract DB 19, based on the value extracted at S20, to acquire the record of the corresponding contract classification. An example of the contract classification master 19b is shown in Fig. 8. In the contract classification master 19b, a single record describes a single contract classification and the contract classification master 19b describes the storage location of the history required for corresponding to the contract classification, and has retained therein data such as the contract classification C_TYPE 19b0 and the DATA_LOCATION 19b1 that indicates the storage location of the target history. For example, when the contract classification C_TYPE 19b0 is "OPERATION RATIO GUARANTEED, PENALTY EXISTS", the corresponding history has the entire history (described as "ALL" in the table) retained in both the history DB 141 and the tape 142. The reason for this is to retain the history in the history DB 141 for allowing a prompt response for a case when an abnormality has occurred to the equipment or an indication thereof is shown thereby keeping the downtime of the equipment as short as possible, as well as for retaining the trace of the operation statuses of the equipment in the tape 142. When the contract classification C_TYPE 19b0 is "OPERATION RATIO GUARANTEED, NO PENALTY", retaining the entire data in the tape 142 as the trace of the operation statuses of the equipment 20 is the same as above, but since there is no penalty placed to the downtime of the equipment 20, the target contracts having a penalty placed is prioritized to shorten the search time for the history of the equipment 20 by retaining in the history DB 141 only the deviated sensor values ("ABNORMAL" in the table) that is the history of abnormalities and indications thereof. When the contract classification C_TYPE 19b0 is "OPERATION RATIO UNGUARANTEED", the entire history is retained in the tape 142 and none is retained in the history DB 141 so that the target contracts having the above operation ratio guaranteed are prioritized to shorten the search time for the history of the equipment 20 (S30). Note that, the status of the above data storage associated with the contract classification C_TYPE 19b0 is only one example and the data storage status associated with the contract classification C_TYPE 19b0 can be changed appropriately according to the set contract details.

Subsequently, the policy creation program 11e acquires the contract number C_ID 19a0 from the record obtained at S10 and acquires the record that has the contract number C_ID that accords with the ID(1) 18b0 in the configuration relation table 18b, and acquires from the configuration relation table 18b the record that has NULL in the END_DATE 18b3 or the record that has the process execution date and time coming between the START_DATE 18b2 and the END_DATE 18b3 (S40). The process proceeds to S60 when there is at least one record that satisfies the process in S40, and proceeds to S70 when there is no such satisfying record (S50).

When the satisfying record is determined to exist in the configuration relation table 18b at S40, the policy creation program 11e acquires the ID of the sensor 22 by tracing the relation from the record. Specifically, since the record acquired at S40 has the contract number specified in ID(1) 18b0 and the equipment ID specified in ID(2) 18b1, the record having the equipment ID in the ID(1) 18b and the component ID in the ID(2) 18b1 is searched next. When determining that a corresponding record exists, the record having the component ID specified in ID(1) 18b0 and the sensor 22 ID specified in ID(2) 18b1 is similarly searched next. Note that, the IDs of the records of the equipment 20, component, and the sensor 22 are distinguished by referring to the head of the value in ID_TYPE 18a1 in the attribute table 18a to confirm that they indicate the DEVICE, the PART and the SENSOR, respectively. These processes are repeated until acquiring all IDs of the sensors 22 that can be tracked from the record acquired at S40 (S60).

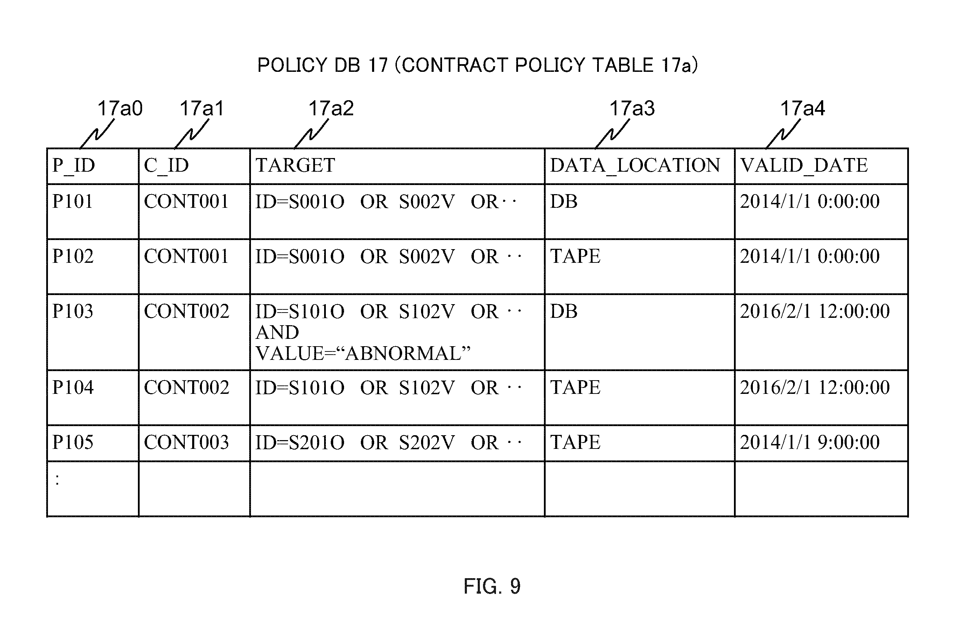

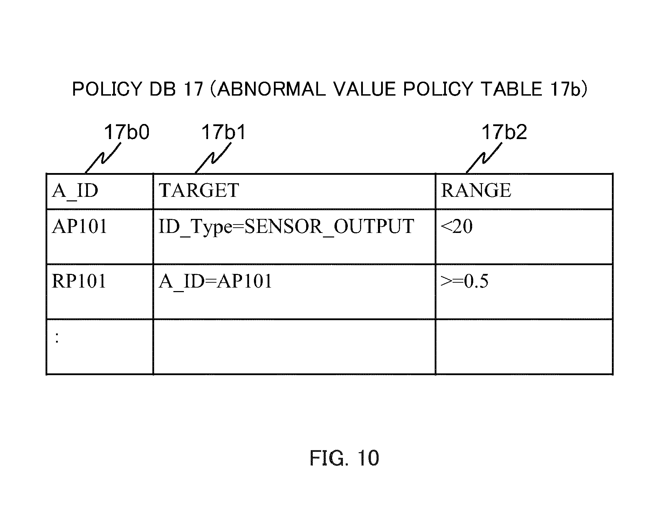

At S80, a record is added to the contract policy table 17a of the policy DB 17 based on the contents acquired at and prior to S60. The policy referred to here has defined the place where the history of the sensor value is retained and the contract policy refers to a policy that is created based on the contents of the contract table 19a. An example of the contract policy table 17a is illustrated in Fig. 9. In the contract policy table 17a, a single record describes a set of the target history condition and the storage location thereof, and there are retained therein data such as the P_ID 17a0 that is an ID for identifying the contract policy, the C_ID 17a1 that indicates the corresponding contract number, the TARGET 17a2 that indicates the condition of the target history, the DATA_LOCATION 17a3 that indicates the storage location of the history, and the VALID_DATE 17a4 that indicates the storage expiry date and time. There may be a case where a plurality of contract policies corresponds to a single contract. For example, in the example shown in Fig. 9, there are two contract policies P101 and P102 in P_ID 17a0 that correspond to the contract number CONT001. P101 indicates the details relating to the history retained in history DB 141 and a plurality of history IDs are specified as the condition of the target history in TARGET 17a2. P102 indicates the details relating to the history retained in the tape 142 and has the same ID with P101 specified in TARGET 17a2. When the target history is a history indicating an abnormality or an indication thereof, "ABNORMAL" is specified in TARGET 17a2 but the specific definition of an abnormal value is retained in the abnormal value policy table 17b in the policy DB 17. An example of the abnormal value policy table 17b is illustrated in Fig. 10. In the abnormal value policy table 17b, a single record describes the definition of a single abnormal value (abnormal value policy), and there are retained therein data such as the A_ID 17b0 that identifies the abnormal value policy, the TARGET 17b1 that indicates the condition of the target history of the abnormal value policy, and the RANGE 17b2 that indicates the border condition of the value. For example, in AP101 in A_ID 17b0, when the value is 20 or smaller for all the sensors 22 IDs falling under ID_TYPE 18a1 of SENSOR_OUTPUT, the value is indicating an abnormal value. When "ABNORMAL" is specified in TARGET 17a2 in the contract policy table 17a, all the abnormal value policies defined in the abnormal value policy table 17b are the target of application. The abnormal value policy is registered by the maintenance business operator using the application 40.

Returning to the description of the process in S80, the policy creation program 11e numbers the identification ID P_ID 17a0 and specifies the contract number C_ID of the contract record detected at S10 in the C_ID 17a0 of the contract policy table 17a, the contents of the ID of the sensor 22 when the sensor 22 ID is acquired in S60 is specified in the TARGET 17a2, and the contents of the DATA_LOCATION 19b1 acquired in S30 in the TARGET 17a2 and the DATA_LOCATION 17a3 of the contract policy table 17a. The END_DATE 19a4 of the record detected in S01 is specified in VALID_DATE 17a4.

When determining that no applicable record exists in S50, the policy creation program 11e makes an inquiry whether a new contract exists using the application 40 and executes the additional policy registration process at and after S60 when a new contract exists. When determining that a new contract does not exist in S70, the policy creation program 11e ends the process. Note that, the present processing flow may be ended when determining that no applicable record exists in S50. The above describes the processing flow of the policy creation program 11e when a new record is added to the contract table 19a.

Similarly, the policy creation program 11e monitors the addition of the new record to the configuration relation table 18b, and when a record having the contract number C_ID 19a0 registered in the contract table 19a is detected to be added in the record of ID(1) 18b0, the policy creation program 11e searches for the ID of the sensor 22 relating to the process performed in S60 above and adds the searched result to the TARGET 17a2 in the contract policy table 17a. When the date and time are already registered in the END_DATE 18b3 in the configuration relation table 18b, the policy creation program 11e deletes the relevant ID from the TARGET 17a2 in the contract policy table 17a at the timing of the date and time.

According to the above processing, the coverage of the guarantee described in the contract and the policies meeting the level of service can be automatically created based on the contract details concluded between the maintenance business operator and the equipment user that have concluded the contract, with regard to the policies defining the migration and deletion of the history DB 141 of the server 10 and the history of the large amount of the sensor values of the equipment 20 accumulated in the tape 142. Thereby, the maintenance business operator or the operator of the server 10 need not define and register the policies after confirming the details that are required every time the contract detail is registered or deleted.

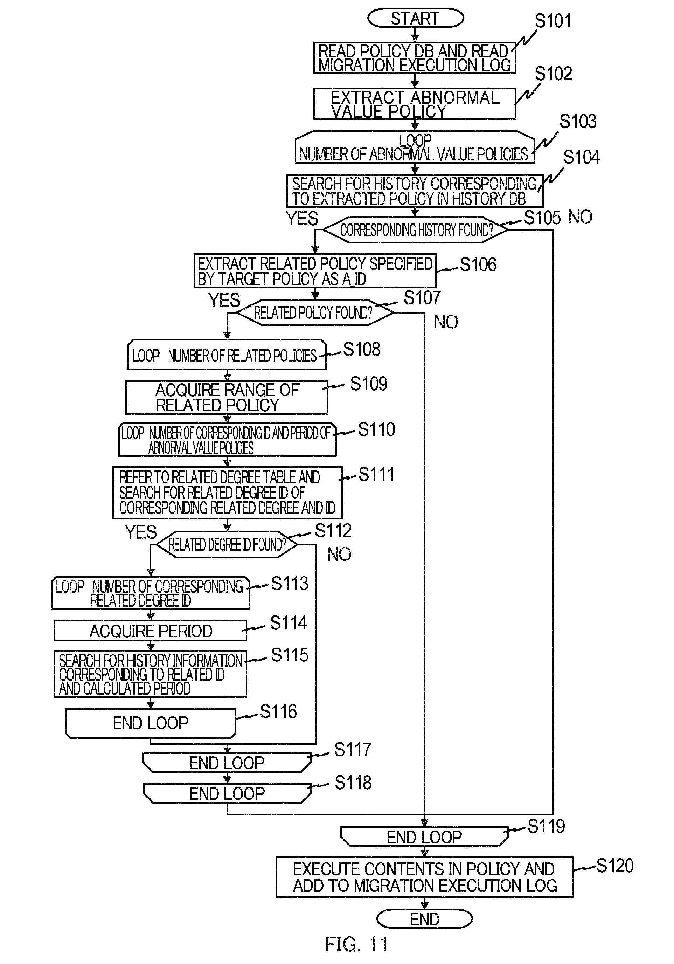

Next, an explanation of the operation of the data migration program 11a will be given. The data migration program is executed when the operator of the server 10 learns the usable capacity and the used capacity of the history DB 141 by using the operation application 30 and when requiring to migrate the history of the sensor values in the history DB 141 to the tape 142 due to lack of remaining capacity or due to lack of capacity in the tape 142 in a similar manner. Additionally, there may be a case where the data migration program 11a is executed periodically, for example, once a week or once a month, or automatically. Fig. 11 illustrates an example of the flowchart of a process performed when a command in the data migration program 11a is executed. Description will be given with reference to Fig. 11.

Upon execution of the command, the data migration program 11a reads the contents in the contract policy table 17a and the abnormal value policy table 17b of the policy DB 17. Additional explanation of the abnormal value policy table 17b will be given in the following. The record of the example in the second row of Fig. 10 has "A_ID=AP101" being an abnormal value policy ID specified in TARGET 17b1. This is a record that is registered with the abnormal value policy associated thereto and means that for the "related degree" with the history defined in the abnormal value policy in "A_ID=AP101", the same process (retained in the history DB 141 in this example) performed for the history applicable as the abnormal value policy is performed for the history (related degree of 0.5 and greater in the example shown in the table) that satisfies the condition of the value specified in RANGE 17b2. The related degree indicates the probability of being searched as the sensor value of the other sensors 22 or as values proximate the sensor value when a deviated sensor value defined in the abnormal value policy is detected and the maintenance business operator searches the past history sensor values for a sensor value similar to the deviated sensor value detected in (3) or (4) of the equipment maintenance work aforementioned in relation to Fig. 1. The related value is defined with the "relation between the sensors" or the "relation of the periods", or with both. The relation between the sensors is, assuming for example, there is a sensor value indicating the "amount of engine oil" as the sensor value having a high related degree with the deviated sensor value (the sensor value of SENSOR_OUTPUT is 20 or smaller) defined in the abnormal value policy. In this case, the sensor value indicating the amount of engine oil is also retained in the history DB 141 if the related degree between the deviating sensor value and the sensor value indicating the amount of oil is high, even when the sensor value indicating the amount of oil is not defined in the abnormal value policy. Hereby, when a maintenance worker detects an abnormality of the engine output falling below 20 and investigates the cause thereof, he/she can refer to the history to compare the abnormalities detected in the past with that at that time since the amount of engine oil at the time is also retained in the history DB 141 together with the past sensor values of those when the engine output was 20 or less. Further, with regard to the relation of the periods, for example, similar to the above, in a case of an indication of abnormality by the sensor value of SENSOR_OUTPUT taking a value of 20 or smaller, and there is a possibility that the sensor value of SENSOR_OUTPUT moves along a pattern of a predetermined value, although being 20 or greater, the maintenance business operator is allowed to compare the times when the abnormalities were detected by retaining in the history DB 141 not only the period when the value of 20 or smaller is sensed but also retaining the period (normal values) prior thereto. A further detailed description of the related degree will be given later.

The data migration program 11a in addition to reading the above contract policy table 17a and the abnormal value policy table 17b, reads the migration execution log retained in the internal file of the server 10. This log has retained therein information relating to heretofore performed migration of the history DB 141 and the date and time of the previously performed migration is acquired from this log and retained (S101).

The data migration program 11a extracts an abnormal value policy from the contents read at S101 (S102). The following processes of S104 to S119 are performed on the abnormal value policy extracted at S102 (S103).

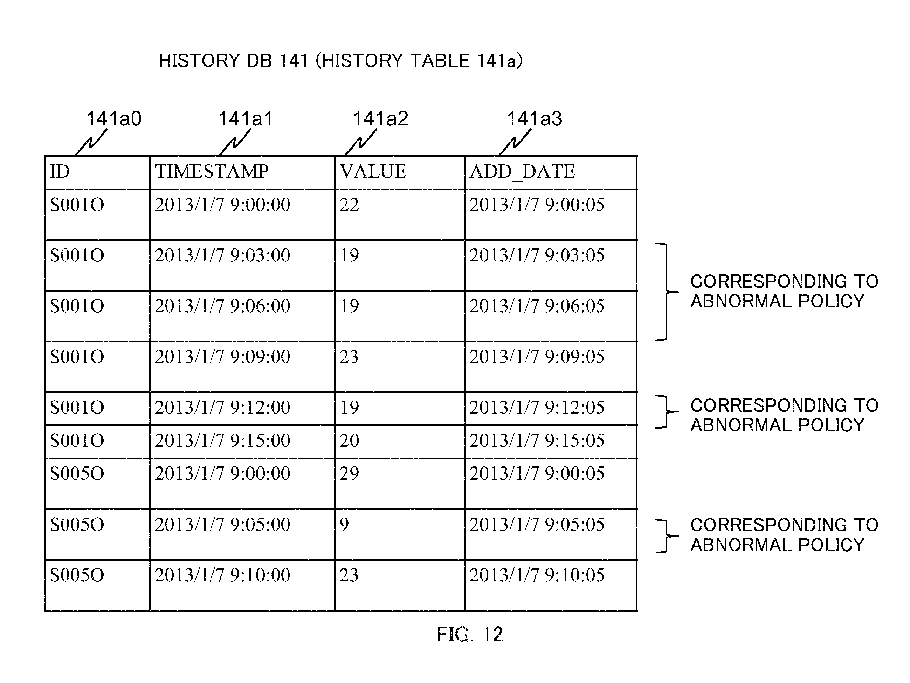

With regard to the abnormal value policy as the target of processing, the history corresponding to this policy is searched from the history table 141a in the history DB 141. For example, the history of the ID of the SENSOR_OUTPUT in ID_TYPE 18a1 whose VALUE is less than 20 is searched. Here, the search target is the history on or after the date and time of the previous migration execution acquired by the ADD_DATE 141a3 at S101. Then the relevant histories are classified using a combination of an ID and a period, in other words, those of a plurality of relevant histories with the same ID and having a continuing TIMESTAMP 141a1 are classified into a single ID and period. For example, the history information corresponding to the abnormal value policy in the example shown in the history table 141a of Fig. 12 are records in the second, third, fifth and eighth rows, but the records in the second and third rows are considered to belong to a single period. Hereby, the combination of the IDs and periods corresponding to the abnormal value policy in this example is three (S104).

The process proceeds to S106 when the corresponding history exists in the history table 141a in S104 and proceeds to S119 when such does not exist and a process on the next abnormal value policy as the process target is performed (S105).

When a history corresponding to the policy exists, the data migration program 11a extracts the policy having the A_ID of the process target abnormal value policy specified as "A_ID=" in the TARGET 17b1 from the contents in the abnormal value policy table 17b read at S101. This policy is described as "relation policy" in the following (S106). The process proceeds to S108 when there is at least one corresponding relation policy in S106. And proceeds to S119 when there is no corresponding relation policy and performs the process with the next abnormal value policy as the process target (S107). The subsequent processes of S109 to S117 are performed on the relation policy extracted at S106 (S108).

Then the data migration program 11a acquires the RANGE 17b2 of the relation policy of the process target (S109).

Thereafter, the data migration program 11a performs the processes of the following S111 to S112 or S116 on each combination of the IDs and periods, for the number of combinations of the IDs and periods corresponding to the abnormal value policy acquired at S104 (S110).

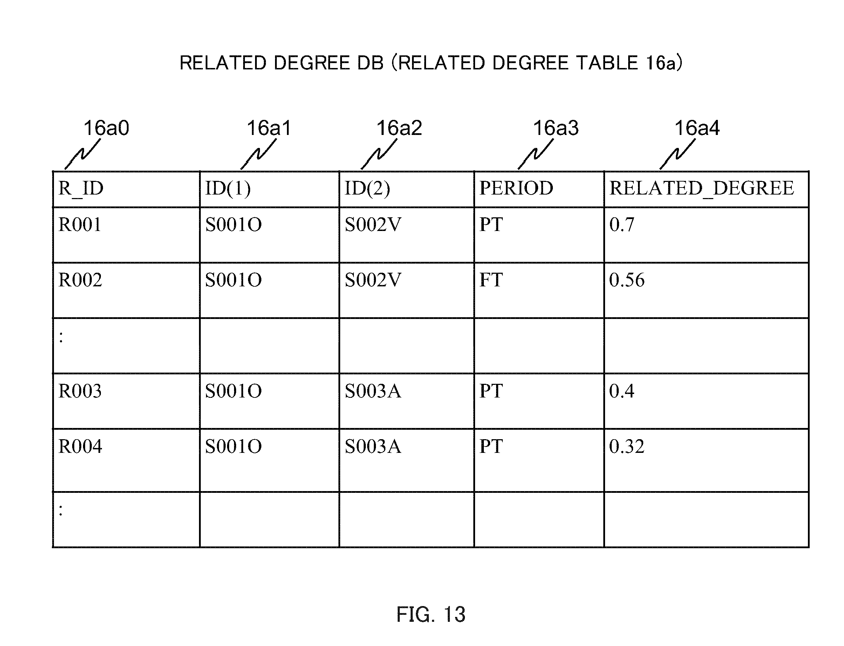

The data migration program 11a refers to the related degree table 16a retained in the related degree DB 16 (related degree information retaining unit) with respect to the ID and period of the process target, and acquires the related degree ID corresponding to the condition of the relation policy acquired at S109. An example of the related degree table 16a is illustrated in Fig. 13. Description of the related degree table 16a will be given first with reference to Fig. 13.

The related degree table 16a defines the related degree of a relation between each sensors and periods and a single record describes a combination of the relation between a pair of sensors and a period. The related degree table 16a has retained therein such as the related degree ID (R_ID) 16a0 that uniquely specifies a single combination of a pair of sensors and a period, ID(1) 16a1 that retains one of the IDs of the pair of sensors, ID(2) 16a2 that retains the ID of the other sensor, PERIOD 16a3 that indicates the type of period, and RELATED_DEGREE 16a4 that denotes the value of the related degree.

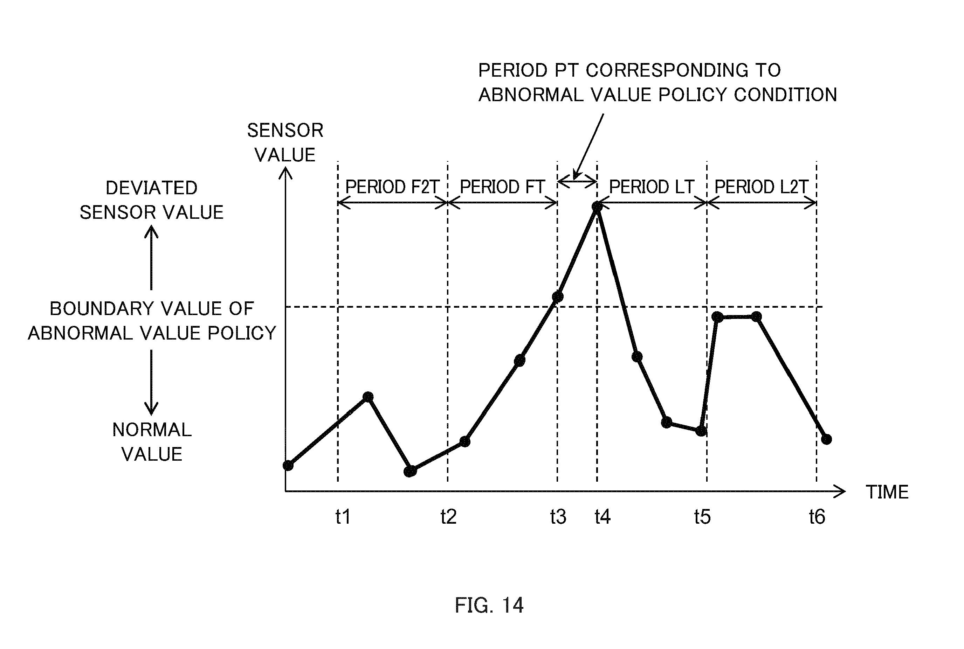

The above relation between the sensors corresponds to the relation between the sensors defined in the above configuration relation table 18b and indicates the combination of the pair of sensors 22 attached to the equipment 20 managed by the server 10. Generally, the relation between the sensors attached to the same equipment 20 or components or those of the same model is considered to be strong, and also the relation between the sensors of the equipment 20 used at the same location or by the same user is considered to be strong. Reversely, the relation between the sensors of the equipment 20 used by the equipment 20 of different models and used by different users or at different locations is considered to be weak. The period above indicates a relative relation to the period of the history corresponding to the RANGE 17b2 in the abnormal value policy. An example of the relation between the sensor value and the period is shown in Fig. 14. "PT" indicates the period corresponding to the condition of the abnormal value policy, and here the period from time t3 to t4 in the example of Fig. 14 applies. "FT" indicates the period right before the period PT corresponding to the condition of the abnormal value policy, and here the period from time t2 to t3 in Fig. 14 applies. The period further prior to "FT" is "F2T" and the period from time t1 to t2 in Fig. 14 applies. Similarly, the period that comes right after PT is "LT" and the period from time t4 to t5 in Fig. 14 applies. The period that comes further after "LT" is "L2T" and the period from time t5 to t6 in Fig. 14 applies. The numeral of n (n being a natural number) in FnT and LnT, and the lengths of the periods FnT and LnT are set in the server 10 to predetermined numerals and lengths in advance.

Returning to the description of the related degree table 16a in Fig. 13, the example of the first record of the related degree ID of R001 in (R_ID) 16a0 has the S001O and the S002V defined in ID(1) 16a1 and ID(2) 16a2, respectively, and PT set in PERIOD 16a3. This means that when for example, a period corresponding to the abnormal value policy exists in sensor S001O, the related degree between this history and the history of the sensor S002V corresponding within the period of the date and time same as those of the above history, is "0.7". The reverse case also holds and when a period corresponding to the abnormal value policy exists to sensor S001V, the related degree between the history thereof and the history of the sensor S001O corresponding in the period PT of the same date and time as the above history is also "0.7". Additionally, the record in the related degree ID of R002 is set to "FT". This means that when for example a period corresponding to the abnormal value policy in the sensor S001O exists, the related degree between the history thereof and the history of the sensor S002V corresponding in the period FT before this period is "0.56". Reversely in a similar manner, when a period corresponding to the abnormal value policy in the sensor S001V exists, the related degree between the history thereof and the history of the sensor S001O corresponding in the previous period FT before the above period is also "0.56". Note that, the related degree for the cases between sensors or periods that are not in the related degree table 16a is "0". Adding, updating, and deleting the record from the related degree table 16a can be performed by the maintenance business operator using the application 40 or the operator of the server 10 using the operation application 30 and determining the related degree based on the contents of the sensor values often searched during investigation of the cause or assumption of the results.

Returning to the description of the process by the data migration program 11a in Fig. 11, the data migration program 11a searches for the ID of the process target matching either ID(1) 16a1 or ID(2) 16a2 in the related degree table 16a as well as the related degree corresponding to the condition acquired in the related degree RELATED_DEGREE 16a4 at S109 (S111).

When the corresponding related ID exists in the process of S111 the process proceeds to S113 and when the related ID does not exist, proceeds to S117 and performs the same process on the combination of the ID and period corresponding to the abnormal value policy as the process target (S112). Subsequently, the processes of S114 to S115 are performed with the related degree IDs corresponding to the search in S111 and the records in the corresponding related degree table 16a as the process targets (S113).

The specific start and end time and date of the PERIOD 16a3 of the record as the process target in the related degree table 16a is acquired based on the period PT corresponding to the abnormal value policy searched in S104. The period is the same as the abnormal value policy in S104 when the value in PERIOD 16a3 is PT but the start or end date and time is calculated based on the value FnT or LnT defined in advance when the value in the PERIOD 16a3 is FnT or LnT (S114).

Then the data migration program 11a searches the history table 141a using the search conditions of the ID other than the ID corresponding to the abnormal value policy, defined in ID(1) 16a1 or ID(2) 16a2 of the records in the related degree table 16a of the process target, and the period acquired in S114. Similar to the case in S104, the search target is the record on or after the date and time of the previous migration execution time acquired in S101 by the ADD_DATE 141a3 (S115). In this way, the history corresponding to the related policy can be acquired through the processes of S114 and S115.

After the process in S115, the data migration program 11a performs the processes in S114 and S115 with the subsequent related degree ID as the process target (S116).

And when the processes up to S116 are performed for all the related degree IDs, the data migration program 11a performs the processes from S101 to S116 with the ID and the period corresponding to the subsequent abnormal value policy as the process target (S117).

After performing the processes up to S117 for all the related degree IDs, data migration program 11a performs the processes of S109 to S117 with the subsequent relation policy as the process target (S118).

And after performing the processes up to S118 for all the relation policies, the data migration program 11a performs the processes in S104 to S118 with the subsequent abnormal value policy as the process target (S119).

And after performing the processes up to S119 for all the abnormal value policies, the data migration program 11a migrates and deletes data according to the details in the contract policy table 17a. The abnormal value policies and the relation policies uses the history corresponding in S104 and S115 as the history corresponding to "ABNORMAL" in TARGET 17a2 of the contract policy table 17a. The history excluded from the migration and deletion is all the records on and after the date and time of the previous migration execution time that were acquired in S101 by ADD_DATE 141a3. The history as the target is deleted from the history DB 141 and the tape 142 when the process date and time have passed the VALID_DATE 17a4. Upon a normal ending, the data migration program 11a adds the date and time when the command from the data migration program 11a was received in the migration execution log (S120). The above is the description on the process flow of the data migration program 11a.

Note that, the above example had the related degree table 16a defined for each combination of the configuration between the sensors and the period, but the related degree table 16a can be defined by only the configuration between the sensors when the relation between the periods is obviously distant. Reversely, the related degree table 16a can be defined by only the period when the relation between the sensors is obviously distant.

With the above process, with regard to the history of the large amount of the sensor values of the equipment 20 accumulated in the history DB 141 of the server 10, data can be migrated to the tape 142 while leaving in the DB together with the deviated sensor values, the history of the normal values having the possibility of being used in the future for investigating the cause of or for assuming the result of an abnormality occurring due to the detected deviated sensor value that indicates an abnormality of the equipment 20 or an indication of an abnormality when there is a need to migrate the history from the DB to the tape 142 or to delete from the DB from the viewpoint of the volume and the search performance of the DB. Hereby, the sensor values of the other sensors 22 in the periphery of a sensor 22 or those of the preceding and following periods can be promptly searched for together with the prompt search for similar sensor values of the past when detecting an abnormality and an indication thereof, without retaining in the DB the history of all the sensors collected from the above sensor 22 thereby allowing to make studies on the countermeasures sought from the investigation of the cause and assumption of the result. In particular, when a deviated sensor value has developed to the equipment that is the target of a maintenance contract which guarantees the operation with a penalty in addition to the history of the sensor values of the equipment as the target, the sensor values of an equipment related thereto are retained in the history DB 141 owing to the relation policy, and thus the histories thereof can be utilized for investigating the cause or assuming the result of an abnormality.

### <Second Embodiment>

The following gives a description of another embodiment of the present invention with reference to the related drawings. Description of the first embodiment was given of the updating of the related degree table 16a assumed to be performed by the maintenance business operator or the operator of the server 10, however, description will be given as the second embodiment of an example where the review of the related degree RELATED_DEGREE 16a4 in the related degree table 16a is automatically conducted by the server 10 itself. The details of the present embodiment other than those given in the following are the same as the first embodiment.

The operations of the programs of the server 10 in the present embodiment will be explained in detail. The present embodiment adopts a configuration whereby the values in the related degree RELATED_DEGREE 16a4 of the related degree table 16a are reviewed and updated using the reference frequency from the application 40 that is operated by the maintenance business operator. In order therefor, the history management program 11b (reference history management unit) in the server 10 counts the frequency of the references made with the application 40. Further, the related degree management program 11c updates the value in the related degree RELATED_DEGREE 16a4 based on the above reference frequency periodically or by the operator of the server 10 executing a command via the operation application 30.

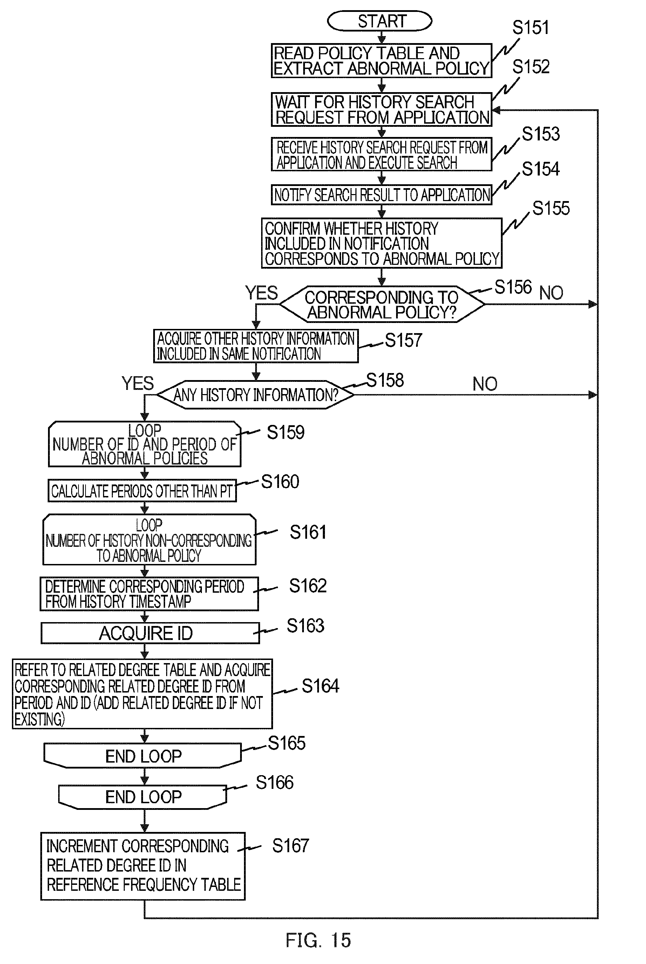

Firstly, the operations of the history management program 11b will be described. A flowchart example of the processes executed by the history management program 11b is illustrated in Fig. 15. Description in the following is given with reference to Fig. 15.

Upon execution of the command, the history management program 11b reads the contents in the contract policy table 17a and the abnormal value policy table 17b, and extracts the abnormal value policy defined therein to read in the memory 11 (S151).

Thereafter, the history management program 11b waits to receive from the application 40 an issuance of a request for referring the history DB 141 (S152).

Upon reception of the reference request to the history DB 141 from the application 40, the history management program 11b searches the history table 141a for the history corresponding to the search condition included in the request (S153). The history management program 11b returns the history obtained as the search result to the application 40 (S154).

Subsequently, the history management program 11b confirms whether a history corresponding to the abnormal value policy read in S151 is included in the history returned to the application 40. When there is a corresponding history, the contents of the history are acquired and the combination of the ID and the period are extracted in a similar manner as in the data migration process in S104 shown in Fig. 11 (S155). After the extraction, the history management program 11b proceeds to the process in S157. The history management program 11b returns to the process in S152 when there is no corresponding history (S156).

When a history corresponding to the abnormal value policy is included in the reply in S156, the history management program 11b confirms whether there are any other histories included in the reply (S157). When there is another history, the history management program 11b proceeds to the process of S159. When there is no other history, the history management program 11b returns to the process of S152 (S158).

The following processes of S160 to S165 are repeated for the combinations of the IDs and periods extracted in S155 (S159).

Firstly, the history management program 11b calculates the specific start and end date and time of the periods (LnT, FnT) other than PT for the combination of the ID and period as the process target based on the details defined in advance (S160). The following processes of S162 to S164 are performed for each of the other history that does not correspond to the abnormal value policy acquired in S157 (S161).

The history management program 11b acquires the TIMESTAMP 141a1 of the history as the process target and determines which period calculated in S160 the date and time corresponds to (S162). Note that, when here is no period calculated in S160 corresponding to the date and time, the process for this history is ended to proceed to the process of the subsequent history. The history management program 11b acquires the ID of the history as the process target in a similar manner (S163).

The history management program 11b searches for the corresponding record in the related degree table 16a based on the period (PERIOD) that corresponds in S162, the ID acquired in S163 and the ID of the history corresponding to the abnormal value policy extracted in S155. The ID can be either ID(1) 16a1 or ID(2) 16a2. When there is no corresponding record, a record is added to the related degree table 16a by numbering the related degree ID. In this case, the value of the related degree RELATED_DEGREE 16a4 is assumed to be "0". The history management program 11b retains in the memory 11 the related degree ID of the corresponding record and the added related degree ID. However, the related degree ID is not added when the related degree ID is already stored in the list of the memory 11 (S164).

After the process in S164, the history management program 11b performs the processes from S162 to S164 with the subsequent history as the process target (S165).

Then after performing the processes up to S165 for all the histories, the history management program 11b performs the process from S160 to S165 with the ID and period corresponding to the subsequent abnormal value policy, as the process target (S166).

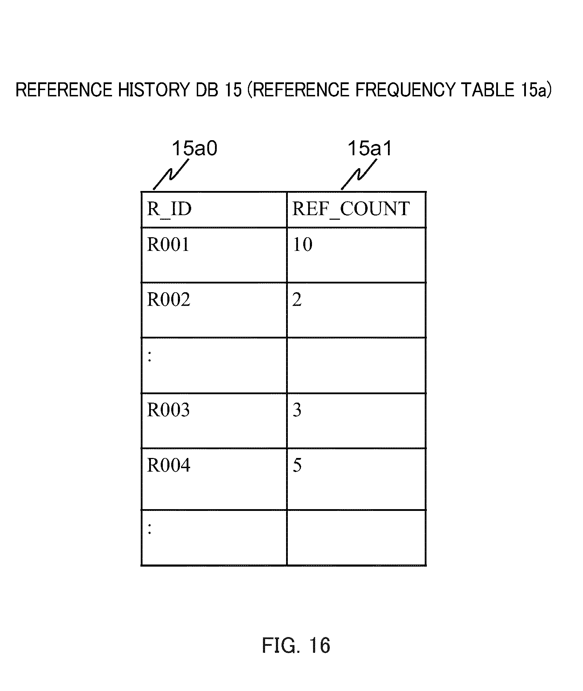

Further, after performing the processes up to S166 for all the ID and period combinations, the history management program 11b acquires the related degree ID list retained in the memory 11 in S164 and confirms whether the corresponding related degree ID exists in the reference frequency table 15a retained by the reference history DB 15, for each related degree ID included in the list. An example of the reference frequency table 15a is shown in Fig. 16. The reference frequency table 15a counts the frequency of the reference made to the application 40 for each related degree ID and retains therein the R_ID 15a0 that indicates the related degree ID and the REF_COUNT 15a1 that indicates the reference frequency. When the corresponding related degree ID exists in this table, the value of REF_COUNT 15a1 is incremented. And when there is no corresponding related degree ID, a related degree ID is added to the reference frequency table 15a and sets the REF_COUNT 15a1 to "1". After performing the processes of updating or adding to the reference frequency table 15a for all the related degree IDs in the list, the process returns to S152 to be in a waiting state (S167). The above has described the processes performed by the history management program 11b.

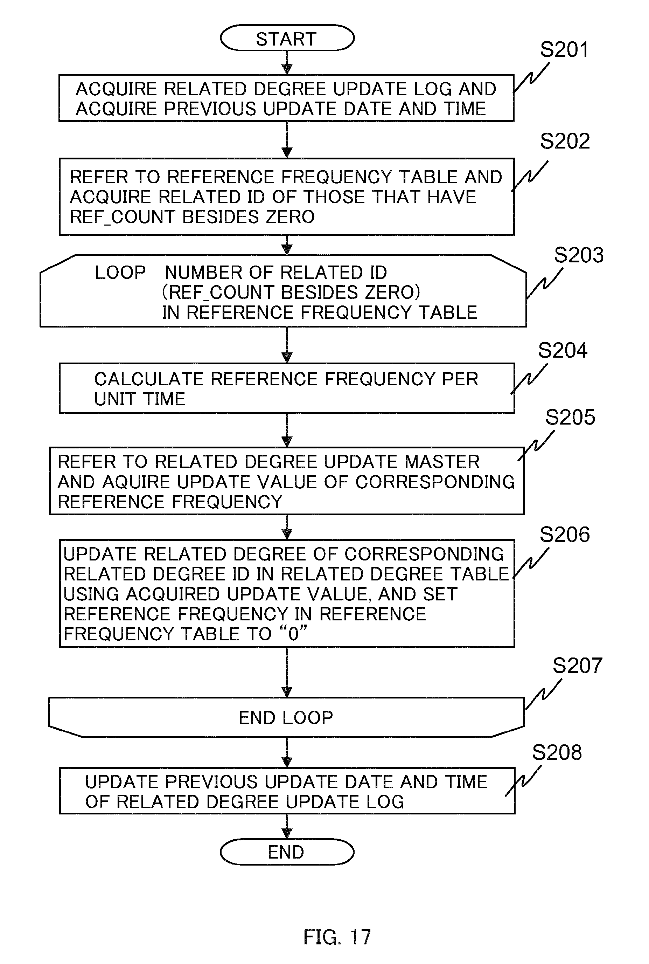

The next description explains the operations performed by the related degree management program 11c. The related degree management program 11c is a program that updates the value in the related degree RELATED_DEGREE 16a4 in the related degree table 16a based on the reference frequency table 15a updated and created by the above history management program 11b. The related degree management program 11c is operated by the operator of the server 10 executing a command through the operation program 30 or periodically. A flowchart example of the processes executed by the related degree management program 11c is illustrated in Fig. 17. Description in the following is given with reference to Fig. 17.

Firstly, the related degree management program 11c acquires the contents in the related degree update log retained as the inner log of the server 10 and acquires the previous update date and time. Additionally, the related degree management program 11c also retains the date and time (command execution date and time) when the command execution of the related degree update program was received (S201).

Subsequently, the related degree management program 11c acquires the contents of the reference frequency table 15a and acquires the R_ID of the related degree ID having the REF_COUNT 15a1 besides "0" (S202).

Then the related degree management program 11c repeats the processes from S204 to S206 for each of the related degree IDs that have the REF_COUNT 15a1 extracted at S202 besides "0" (S203).

Subsequently, the related degree management program 11c acquires the reference frequency REF_COUNT 15a of the related degree ID as the process target. Thereafter, the related degree management program 11c calculates the reference frequency per unit time from the difference between the previously updated date and time acquired in S201 and the command execution date and time. For example, when the related degree management program 11c is started periodically every Sunday at 0 o'clock midnight, and the reference frequency during this period is seven times with the unit time being one day, the reference frequency per unit time is "1" (S204).

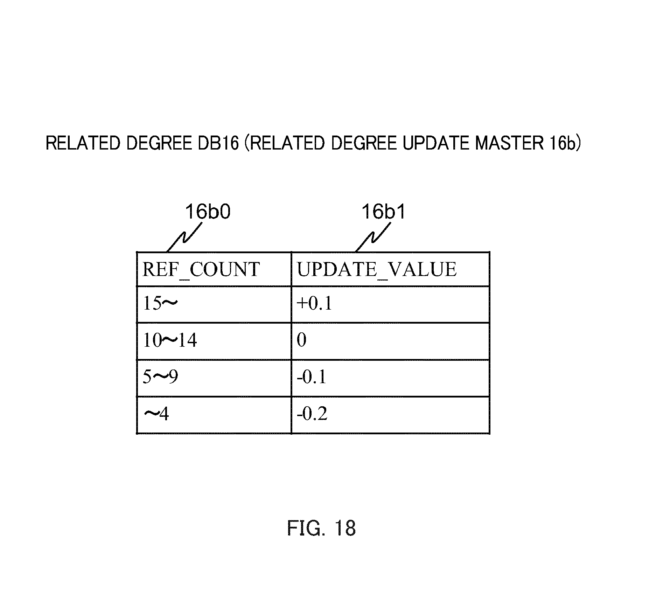

The related degree management program 11c acquires the corresponding contents in the related degree update master 16b retained by the related degree DB 16 based on the reference frequency per unit time calculated in S204. An example of the related degree update master 16b is illustrated in Fig. 18. This master is for retaining the update value of the related degree based on the reference frequency per unit time and retains therein such as the reference frequency per unit time REF_COUNT 16b0 and update value UPDATE_VALUE 16b1. For example, when the reference frequency per unit time is "1", the update value is "-0.2" in the example shown in Fig. 18 (S205).

Subsequently, the related degree management program 11c updates the value of the related degree RELATED_DEGREE 16a4 of the corresponding related degree ID in the related degree table 16a based on the update value acquired in S205. For example, when the value of the related degree in the related degree table 16a is 0.7 and the update value is -0.2, the value after update is 0.5. When the updating is completed, the related degree management program 11c updates the REF_COUNT 15a1 of the corresponding related degree in the reference frequency table 15a to "0" (S206).

After performing the process of S206, the related degree management program 11c performs the processes of S204 to S206 with the subsequent related degree ID as the process target (S207).

Further, after performing the processes up to S207 for all the related degree IDs, the related degree management program 11c updates the previously updated date and time of the related degree update log to the value of the command execution date and time (S208), and ends the process. The above has described the processes performed by the related degree management program 11c.

The above process allows to review and update the related degree between the deviated sensor value, and other periods and sensors in association with the reference frequency from the application 40. Hereby, data migration can be performed while leaving the history having a high probability of being searched, such as by leaving in the history DB 141 the history having a tendency of being searched, in accordance to the tendency of the past history frequently referred to when the maintenance business operator that utilizes the application 40 investigates a cause or assumes a result of an abnormality.

### <Third Embodiment>

The following gives a description of the third embodiment of the present invention. The related degree management program 11c in the second embodiment was operated by an execution of a command from the operator of the server 10 as the trigger. However, in the third embodiment, an example where the related degree management program 11c is executed by the changes made to the configuration relation table 18b as the trigger is described. The details of the present embodiment other than those given in the following are the same as those in the second embodiment.

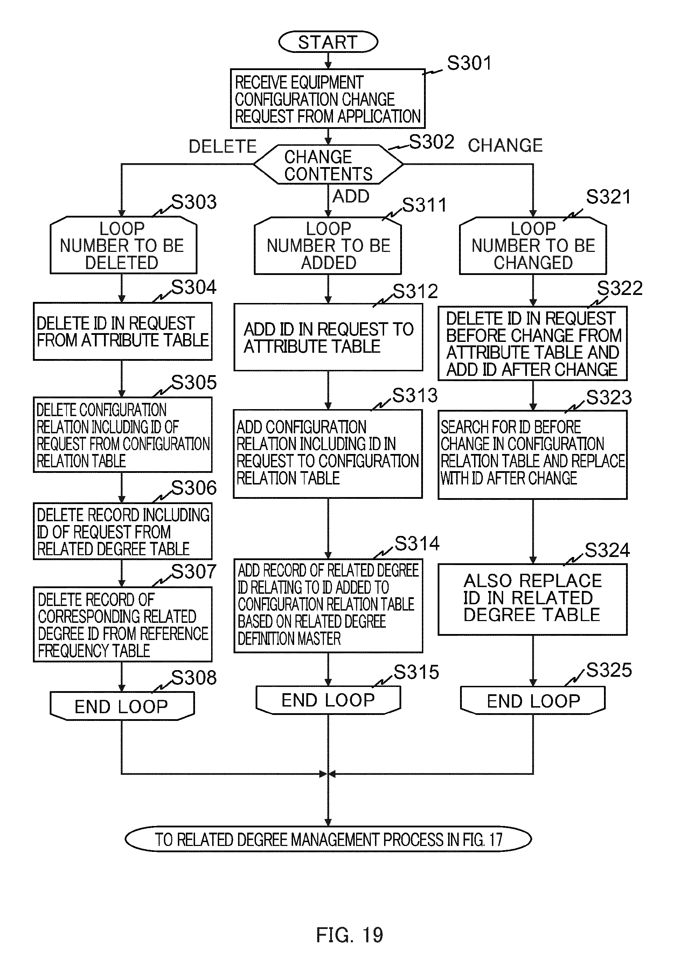

Firstly, the operations by the programs of the server 10 in the present embodiment are explained. In the present embodiment, the maintenance business operator makes a request to the server 10 to change the equipment configuration, such as to add and place, remove the equipment 20 or change a component of the equipment 20 through the application 40. Upon reception of this request, the server 10 performs a process corresponding to this request with the equipment configuration management program 11d. A flowchart example of the processes executed by the equipment configuration management program 11d here is illustrated in Fig. 19. Description in the following is given with reference to Fig. 19.

Firstly, the equipment configuration management program 11d receives a request relating to the equipment configuration change request from the application 40 (S301). Upon reception of the request, the equipment configuration management program 11d refers to the contents therein to determine whether the request is for deleting, adding or changing equipment and the like. The equipment configuration management program 11d performs the process of S303 for the case of deleting, S311 for the case of adding, and S321 for the case of changing (S302). Note that, when the place of use and the user is changed, the equipment configuration management program 11d performs "deletion" and "addition" instead of "changing" and when a component or a sensor 22 is changed, the equipment configuration management program 11d performs "change". This is determined in the application 40.

When an equipment and the like (not only equipment but all the IDs of the location, user, component, sensor 22 etc. that are managed by the equipment configuration master 18 are the targets) is deleted, the equipment configuration management program 11d acquires the ID of the target of deletion included in the request received in S301 and performs the processes of S304 to S308 for each ID (S303).

Firstly, the equipment configuration management program 11d acquires from the details of the request whether the ID specified in the request is for deleting also the attribute or just a deletion from the configuration. In the former case, the equipment configuration management program 11d deletes the record corresponding to the deletion target ID from the attribute table 18a. In the latter case, nothing is performed and the process proceeds to the subsequent process (S304).

When the attribute is also deleted, the equipment configuration management program 11d deletes all the records specified in the deletion target ID of ID(1) 18b0 or ID(2) 18b1 from the configuration relation table 18b. In the case of a deletion from the configuration, the equipment configuration management program 11d registers the date and time of the process execution time in the END_DATE 18b3 of the record included in the deletion target ID of ID(1) 18b0 or ID(2) 18b1 (S305).

The equipment configuration management program 11d deletes all the records specified in the deletion target ID of ID(1) 18b0 or ID(2) 18b1 from the related degree table 16a. With regard to the related degree table 16a, the records are deleted for both the case where the attribute is also deleted and the case of only a deletion from the configuration (S306).

The equipment configuration management program 11d deletes from the reference frequency table 15a the record corresponding to the related degree ID (R_ID) 16a0 of the record deleted from the related degree table 16a in S306 (S307).

After performing the process in S307, the equipment configuration management program 11d performs the processes in S303 to S307 with the subsequent deletion target ID as the process target (S308). When the processes for all the deletion targets are completed, the equipment configuration management program 11d starts the related degree management program 11c and updates the related degree.

Returning to the process of S302, in the case of an addition of equipment and the like, the equipment configuration management program 11d acquires the addition target ID included in the request received in S301 and performs the processes of S312 to S314 for each ID (S311).

First, the equipment configuration management program 11d adds the record of the addition target ID in the attribute table 18a in addition to the ID_TYPE included in the request. In the case where the corresponding ID already exists in the attribute table 18a, however, the process proceeds to the subsequent process without doing anything (S312).

Then when the request has specified in addition to the addition target ID IDs related to the addition target ID, the equipment configuration management program 11d adds a number of the records same as the number of the specified IDs to the configuration relation table 18b. Here, the START_DATE 18b2 specifies the date and time the record is added. In the case where the relation of such as the inclusion relation is to indicate a hierarchical relation, the ID positioned at an order higher than the addition target ID is specified in the request. The addition target ID is registered in the ID(2) 18b1 and the related ID is registered in the ID(1) 18b0. In the case of the same model and the like having no hierarchical relation either ID can be registered in the ID(1) 18b0 or ID(2) 18b1 (S313).

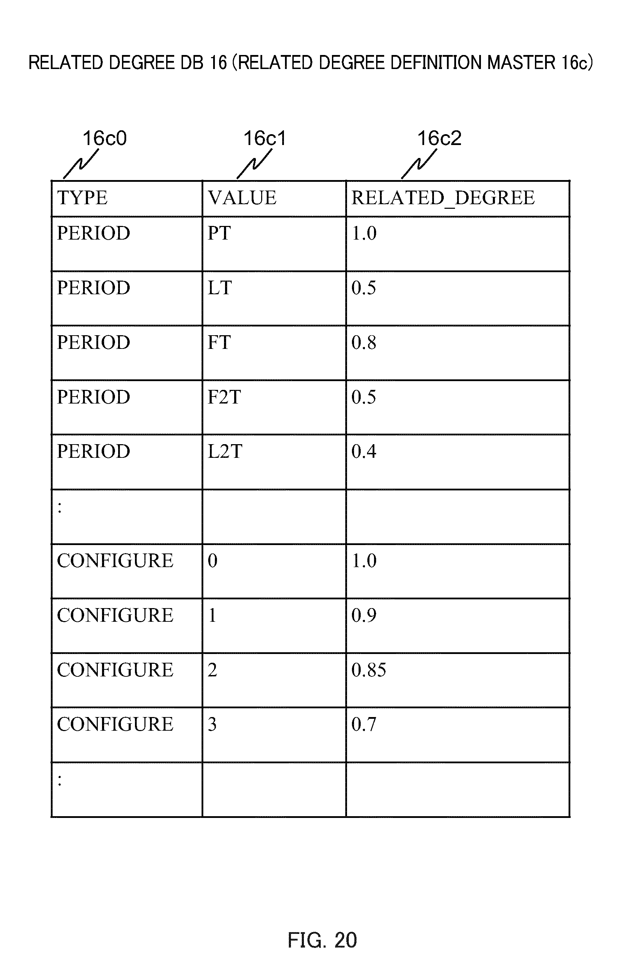

Subsequently, in the case the ID_TYPE 18a1 of the added ID indicates the sensor 22 (in the case of a character string starting with "SENSOR_"), the equipment configuration management program 11d adds a record corresponding to the addition target ID to the related degree table 16a based on the related degree definition master 16c retained by the related degree DB 16. An example of the related degree definition master 16c is illustrated in Fig. 20.

The related degree definition master 16c has the initial value of the related degree defined for each relation between sensors or for each period. A single record describes an initial value of the related degree assigned to a value of a single relation or a period, and retains therein such as TYPE 16c0 that indicates either the relation (CONFIGURE) or the period (PERIOD) is the subject of the record, VALUE 16c1 that indicates the value of the TYPE, and RELATED_DEGREE 16c2 that indicates the initial value of the related degree. When the TYPE is PERIOD (period), PT or LnT and FnT are specified in VALUE 16c1. And when the TYPE is CONFIGURE (relation), the distance between the sensors 22 is specified in VALUE 16c1. The distance between the sensors 22 means the logical relation of proximity or the remoteness between the sensors 22 lead from the equipment configuration. Taking the example in Fig. 21 for instance, both the SENSOR A and the SENSOR B are sensors 22 attached to the same component PART 01 so the distance is defined as "1". In the case of the SENSOR A and the SENSOR C, the sensors 22 are attached to the different components of the same equipment 20 (EXCAVATOR a) and so the distance is defined as "2". Incidentally, the distance for a case of the same sensor is "0". Hereby, the logical configuration of the equipment as that shown in Fig. 21 can be created from the records in the equipment configuration table 18b and the distance between the sensors 22 can be calculated based on this.

As explained above, the sensors 22 corresponding to all the distances in TYPE 16c0 "CONFIGURE" defined in the related degree definition master 16c are acquired with the configuration relation table 18b. For example, when the records with to the distance up to "3" are defined in the related degree definition master 16c, the contents of the configuration relation table 18b (only the record having END_DATE 18b3 set to NULL or the record of the date and time of the process execution time between START_DATE 18b2 and the END_DATE 18b3 are of subject) are referred to and the IDs of the sensors 22 added based on the logical configuration of the equipment 20 and all the sensors 22 of those with the distance up to 3 are acquired. And for all the acquired sensors 22, the combinations of all the periods in TYPE 16c0 "PERIOD" defined in the related degree definition master 16c are added to the related degree table 16a as the records. For example, when there are four sensors 22 that satisfy the distance between the sensor 22 as the addition target to be VALUE 16c1 in the TYPE 16c0 "CONFIGURE" and there are five, specifically PT, LT, FT, L2T, and F2T, defined as VALUE 16c1 of TYPE 16c "PERIOD" in the related degree definition master 16c, the number of records added to the related degree table 16a is 20 of the combinations of the above two. The value to be registered in the related degree RELATED_DEGREE 16a4 in the related degree table 16a is the product of the initial values of the related degree in the corresponding TYPE 16c0 "CONFIGURE" and the TYPE 16c0 "PERIOD" acquired from the related degree definition master 16c. For instance in the example shown in Fig. 20, when the VALUE 16c1 of CONFIGURE is "2" and the VALUE 16c1 of PERIOD is "FT", 0.8 x 0.85 = 0.68 is the value to be registered in the related degree RELATED_DEGREE 16a4 in the related degree table 16a. This calculation is made for all the records added to the related degree table 16a and registers the calculated related degrees. Here, this process is not performed when the added ID of ID_TYPE 18a1 is of that other than the sensor 22 (S314).

After the process of S314, the equipment configuration management program 11d performs the processes of S312 to S314 with the subsequent addition target ID as the process target (S315). Upon completion of the processes on all the addition targets, the equipment configuration management program 11d starts the related degree management program 11c and updates the related degree.

Returning to S302, in the case of changing the equipment and the like, the equipment configuration management program 11d acquires the ID after changing included in the request received in S301 and performs the processes of S322 to S324 for each ID (S321).

In the case of changing, the equipment configuration management program 11d does not delete the ID before changing specified in the request from the attribute table 18a and just changes the configuration to another ID. The ID after changing is added to the attribute table 18a but does not add the ID after changing if there already exists one in the attribute table 18a. When adding the ID, the ID_TYPE included in the request is added therewith. However, the changing is not approved when the ID_TYPE of the ID after changing included in the request does not match with the ID in ID_TYPE 18a1 before changing and ends the process as an error (S322).

Subsequently, the equipment configuration management program 11d searches for the record having the ID before changing specified in ID(1) 18b0 or ID(2) 18b1 in the configuration relation table 18b and records the date and time of the process execution time in the END_DATE 18b3 for the corresponding record. Thereafter, the equipment configuration management program 11d sets the ID before changing to the ID after changing (but the other ID is inherited) and adds a record that has the START_DATE 18b2 as the time and date of the process execution time (but the END_DATE 18b3 is NULL), based on the above specified record (S323).

The record specified with the ID before changing in ID(1) 18b0 or ID(2) 18b1 is searched for in the related degree table 16a and the corresponding record is updated with the ID after changing (S324).

After the process in S324, the equipment configuration management program 11d performs the processes in S322 to S324 with the subsequent addition target ID as the process target (S325). Upon completion of all the processes for the addition targets, the relation degree management program 11c is started to update the related degree. The above describes the processing flow of the equipment configuration management program 11d.

Note that, the example described above assumes that the relation degree was calculated by multiplying the initial value of the distance by the initial value of the configuration between the sensors 22 acquired from the related degree definition master 16c in S314 but the related degree may be calculated using a calculation formula including the initial value of the distance defined in advance and the initial value of the configuration between the sensors 22. Additionally, as in the description of the first embodiment, the related degree may be calculated with only the configuration between the sensors 22 when the relation between the period is obviously distant. Reversely, the relation degree may be calculated with only the period when the relation between the sensors 22 is obviously distant.

With the above process, the relation degree can be automatically reviewed and revised with the case where the changings of the equipment configuration (changes to the place where the equipment is used or to the user, or changings of the component or the sensor) that has a possibility of creating large changes to the related degree as the trigger. Hereby, the related degree can be instantaneously revised with the changes made to the equipment configuration and thus allows data migration that leaves the normal sensor value in the DB even in the case where there are changes made to the target of the normal sensor value having a high possibility of being searched together with the deviated sensor value before and after the changes made to the equipment configuration.

Although the embodiments for carrying out the invention has been specifically described hereinabove, the present invention is not to be limited thereto and can be altered in various ways without departing from the scope of the present invention. For example, a tape was assumed as the migration destination of the history from the DB in the embodiment described above, however, the present invention can be applied to the case where another storage medium is used or where history is deleted without migrating.

Further, description was given in the above embodiment assuming that the server 10 consolidates such as the history and equipment configuration information, however, the actual location of the information and function does not matter as long as the server 10 can freely utilize and refer to by virtual consolidation in also the case of retaining information and functions in a distributed manner.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An information management device collects from a plurality of equipment (20) and retains operation information being information that indicates operation statuses of the plurality of equipment (20), and refers with an information utilizing device that provides a service that utilizes the operation information, the device comprising:
a contract information retaining unit (19) that retains contract information being information relating to a contract that has defined a service level in relation to the equipment provided by the information utilizing device; and
a management policy creation unit (11e) that acquires from the contract information retaining unit (19) the retained contract information of each of the equipment (20), and creates based on the contract information management policy information being information that defines a management scheme of the operation information retained for each of the equipment (20), to include storage location information being information of a storage location of at least each of the storage information.

2. The information management device according to claim 1, further comprising
an operation information history retaining unit (15) that retains the operation information collected from each of the equipment (20) in a chronological order corresponding with each of the equipment (20), and
an operation information management unit that acquires from the operation information history retaining unit (15) the operation information corresponding to each of the equipment (20), and manages the operation information relating to each of the equipment based on the management policy information corresponding to each of the equipment (20),
wherein the operation information management unit acquires the operation information corresponding to each of the equipment (20) from the operation information history retaining unit (15), and refers to the management policy information corresponding to each of the equipment to reallocate the storage location of the operation information in accordance with the storage location information defined for the operation information corresponding to each of the equipment (20).

3. The information management device according to claim 2, wherein
the operation information is a numerical value data and the management policy information includes a judgment condition relating to the numerical value data,
the information management device (10)
further including a related degree information retaining unit (16) that retains related degree information that is information indicating a degree of relation of an interrelation between each of the equipment (20), or an interrelation between periods set to a predetermined length before and/or after a time the numerical value data satisfies the judgment condition,
the operation information management unit acquires the operation information retained corresponding to each of the equipment (20) in the operation information history retaining unit (15), refers to the management policy retaining unit and determines whether the judgment condition is satisfied, and for operation information determined to satisfy the judgment condition, refers to the related degree information retaining unit (16) and reallocates a storage location, of the equipment (20) or the period that has a predetermined related degree, in accordance with the operation information as well as the management policy information.

4. The information management device according to claim 3 further comprising
a reference history management unit that manages reference history of the operation information from the information utilizing device , and
a related degree information updating unit that is retained in the related degree information retaining unit (16) and that updates the related degree information corresponding to the equipment (20),
wherein
the reference history management unit sums up a reference frequency of the operation information corresponding to every one of the equipment (20) or the periods, and
the related degree updating unit updates the related degree information based on the reference frequency for every one of the equipment (20) or the periods.

5. The information management device according to claim 4 further comprising
an equipment configuration information retaining unit (18) that retains equipment configuration information that is information including attribute information that indicates an attribute for each of the equipment (20) and equipment configuration information that defines a correlation of the attributes,
wherein
the related degree updating unit continuously monitors the equipment configuration information retaining unit (18) and when determining that attribute information relating to any one of the equipment (20) or the equipment configuration information has been changed, updates the related degree information retained in the related degree information retaining unit (16) with regard to the equipment (20) determined to have been changed.

6. An information management method collects from a plurality of equipment (20) and retains operation information being information that indicates operation statuses of the plurality of equipment (20), and refers with an information utilizing device that provides a service that utilizes the operation information, the method performed by a computer including a processor (12) and a memory (11), comprising:
retaining contract information being information relating to a contract that has defined a service level in relation to the equipment (20) provided by the information utilizing device; and
acquiring the retained contract information of each of the equipment (20), and creating based on the contract information management policy information being information that defines a management scheme of the operation information retained for each of the equipment (20), to include storage location information being information of a storage location of at least each of the storage information.

7. The information management method according to claim 6, wherein the computer
retains the operation information collected from each of the equipment (20) in a chronological order corresponding with each of the equipment (20),
acquires from the operation information history retaining unit (15) the operation information corresponding to each of the equipment (20), and manages the operation information relating to each of the equipment (20) based on the management policy information corresponding to each of the equipment (20), and
acquires the operation information corresponding to each of the equipment (20), and refers to the management policy information corresponding to each of the equipment (20) to reallocate the storage location of the operation information in accordance with the storage location information defined for the operation information corresponding to each of the equipment (20).

8. The information management method according to claim 7, wherein
the operation information includes numerical value data and the management policy information includes a judgment condition relating to the numerical value data, and
the computer
retains related degree information that is information indicating a degree of relation of an interrelation between each of the equipment (20), or an interrelation between periods set to a predetermined length before and/or after a time the numerical value data satisfies the judgment condition, and
acquires the operation information retained corresponding to each of the equipment (20) in the operation information history retaining unit (15), refers to the management policy retaining unit and determines whether the judgment condition is satisfied, and for operation information determined to satisfy the judgment condition, refers to the related degree information retaining unit (16) and reallocating a storage location, of the equipment (20) or the period that has a predetermined related degree, in accordance with the operation information as well as the management policy information.

9. The information management method according to at least one of claims 6 to 8 wherein the computer further
manages reference history of the operation information from the information utilizing device by summing up a reference frequency of the operation information corresponding to every one of the equipment (20) or the periods, and
updates the related degree information corresponding to the equipment (20) based on the reference frequency for every one of the equipment (20) or the periods.

10. The information management method according to claim 9 wherein the computer further
retains equipment configuration information that is information including attribute information that indicates an attribute for each of the equipment (20) and equipment configuration information that defines a correlation of the attributes, and
continuously monitors the equipment configuration information retaining unit (18) and when determining that attribute information relating to any one of the equipment (20) or the equipment configuration information has been changed, updates the related degree information retained with regard to the equipment (20) determined to be have been changed.
